# EUROPEAN PATENT SPECIFICATION

(11) **EP 2 794 517 B1**
(45) Date of publication and mention of the grant of the patent: **05.08.2026**
(21) Application number: 11813916.1
(22) Date of filing: 22.12.2011
(51) Int. Cl.: C05G 3/00, C05F 11/08, C05G 5/23

(54) **METHOD OF PRODUCING A LIQUID MICROBIAL ORGANIC FERTILIZER**
VERFAHREN ZUR HERSTELLUNG EINERS FLÜSSIGEN MIKROBIELLEN ORGANISCHEN DÜNGEMITTELS
PROCÉDÉ DE PRODUCTION D'UN ENGRAIS ORGANIQUE MICROBIEN LIQUIDE

(43) Date of publication of application: 29.10.2014
(73) Proprietor: Chervonyi, Volodymyr, Kyiv Region 08013 (UA)
(72) Inventor: Chervonyi, Volodymyr, Kyiv Region 08013 (UA)
(74) Representative: Wlasienko, Jozef
(86) International application number: PCT/PL2011/000141
(87) International publication number: WO 2013/109153

(56) References cited:
- WO-A1-2012/085647
- DE-A1- 102008 031 805
- RU-C2- 2 253 641
- UA-A- 61 484
- UA-U- 21 931
- US-A- 4 985 060
- US-A1- 2003 167 811
- DATABASE EPODOC [online] EUROPEAN PATENT OFFICE, THE HAGUE, NL; 17 November 2003 (2003-11-17), NIECHESOV IVAN OLEKSANDROVYCH: "A MICROBE SOIL INOCULATE", XP002687226, Database accession no. UA-2003021259-A
- DATABASE WPI Week 200605, Derwent World Patents Index; AN 2006-043619, XP002687227
- DATABASE WPI Week 200348, Derwent World Patents Index; AN 2003-511133, XP002687228

## Description

The present invention refers to the field of agriculture, namely to developing compositions and production of ecologically clean bioorganic fertilizers and it can be used in agriculture, forestry, growing of ornamental plants, at allotments, and for the industrial treatment of poultry and animal breeding waste.

Natural organic fertilizers used in plant cultivation are characterized by low efficiency and therefore in order to obtain high yields they are soil-applied in large quantities - 7 - 30 t/ha. On the other hand, intensive use of mineral fertilizers leads to significant mineralization of the soil and to a loss of fertility.

Therefore, in the present conditions of land use, especially important is searching for new forms of ecologically clean bioorganic fertilizers and liquid utility formulations useful in organic farming and ensuring the optimization of absorption of mineral nutrients by cultivated plants, obtaining high yields, reduction of chemical load of agricultural land and soil restoration. There are drastic shortages of such highly efficient bioorganic fertilizers, obtained by microbiological processing of poultry manure and animal husbandry and also their liquid utility forms.

The closest to the proposed in the present invention liquid utility form of a bioorganic fertilizer, in a technical sense and the result obtained, is the known liquid bioorganic fertilizer (patent RU 2360893). The technical result in a well-known fertilizer has been achieved in such a way that the fertilizer, despite the macro- and micronutrients in a quantity, of the wt. % of completely dry matter: nitrogen - 4.0 - 7.0, including ammonium nitrogen - 2.5 - 4.0, phosphorus (P₂O₅) - 7.0-12.0, potassium (K₂O) - 1.0-3.0; micro-nutrients, mass concentration, mg/l, no more than: copper - 3.0, cobalt - 5.0, zinc - 23.0; water wt. % 85 - 95, additionally comprises phytohormones, humic acids (at least 1000.0 mg/l) and fulvic acids (at least 1000.0 mg / l).

This liquid bioorganic fertilizer is obtained by subjecting agricultural manure, for example, cattle manure, swine manure, bird droppings, etc.) to methane fermentation with using leaven comprising methane producing bacteria of the *"Methane-bacterium species"* type. The process is carried out as follows: the starting raw material is fed to the receiving tray, from where it is fed by means of a pump to an intermediate container. The raw material from intermediate container is fed by dosing pump to the bioreactor, where methane (anaerobic) fermentation of the initial raw material is carried out at temperatures ranging from +40° to +56°C. Microbiological leaven is added to the raw material once at a stage of turning bioreactor on. The leaven is prepared by anaerobic (methane) fermentation of fresh cow and horse manure, and also goose manure, taken in the proportion 1:(1.5-2.5):(2.5-3.5). Processed manure or faeces - ready fertilizer - is spontaneously poured from the bioreactor into the tray for the finished product.

The resulting bioorganic fertilizer is a liquid in colour from light brown to dark brown with pH 7.0- 8.5.

However, the effectiveness of the known bioorganic fertilizer is insufficiently high because of the lack of the microbial diversification in its composition, especially of effective microorganisms balanced according to the generic composition comprising the following dominant genera: lactic fermentation bacteria *Lactobacillus plantarum* and *Lactobacillus casei,* photosynthetic bacteria *Rhodopseudomonas palustris* and yeast *Saccharomyces cerevisiae.* This conditions its low biological activity, a narrow application scope to improve plant growth and development, weak influence on the activation of soilmicrobial processes and micro-organisms cenose of soil damaged by human activity.

It is known the method for obtaining a liquid complex humic fertilizer, comprising preparing a water-peat suspension, treatment it with alkaline reagent, allowing the suspension to settle and separating the liquid fraction, and adding a substance - a source of nutrients for plants (dry chicken dung_is used). It is added to the water-peat suspension before it is treated with the alkaline reagent (patent RU 2015949). The disadvantage of this method is a multi-stage technological process, comprising dewatering and decontamination of chicken dung.

It is known the method for obtaining a complex fertilizer, which consists of carrying out a microbiological fermentation of an aqueous suspension of vermicompost at 25-30°C and continuous enrichment it with oxygen within 150-170 hours (patent RU 2107054). The disadvantage of the method is insignificant content of humic substances in the finished product (no more than 3-5% of water-soluble compounds are passed to water extract). In addition, the process is characterized by long-term durability and high energy consumption.

It is also known the method for obtaining liquid plant growth and development biostimulant of humus-containing substances (patent RU 2112763), according to which a bacterial suspension is obtained (a water extract of substances containing humus: vermicomposts, composts, zoohumus that contains water-soluble compounds and soil micro-organisms). After separating the water extract, a water-insoluble fraction is subjected to alkaline extraction. Alkaline extract after neutralization with nitric acid is combined with the bacterial suspension to achieve the final target product.

The disadvantages of the given method to obtain a liquid plant growth and development biostimulant are low content of humic and fulvic substances in the target product (totally about 0.25% dry matter substance), as well as insufficient amount of biomass of useful soil micro-organisms.
The prior art discloses a microbial soil inoculum (Application UA2003021259A (UA61484A) which is a mixture of live microbial cultures. It contains phototrophic anoxygenic purple non-sulphuric bacteria of the species *Rhodopseudomonas palustris 100-Y* and *Rhodobacter spheroides 5, homofermentative streptobacteria,* bacilli of *Lactobacillus* species: *L. casei 21* and *L.plantarum 51,* homofermentative streptococci of the species *Lactococcus lactis 47* and single-celled fungi *Saccharomyces cerevisiae 22.* It is impossible to obtain a liquid bioorganic fertilizer using the described method.
The prior art discloses a biopreparation for enhancing the productivity of agricultural crops (RU 2 264 999 C2), which is a culture liquid containing a mixture of microbial cells and their metabolic products. The stock component, prepared from pure microbial strains, is the basis for the production of a water-suspension concentrate. However, it is impossible to obtain a liquid bioorganic fertilizer using the described method.
The biopreparation is prepared in three stages as follows. 1. The stock basis of the biopreparation is prepared from a mixture of pure microorganisms cultured in appropriate selective media. 2. A water-suspension concentrate is prepared from the stock biopreparation at a ratio of 1/50 to the nutrient medium at a temperature of 30-32°C. As an "intermediate" product, it is not used independently. 3. A production (ready-to-use) preparation - an aqueous suspension - is prepared from the concentrate in a ratio of 1/50 to the nutrient medium. A liquid bioorganic fertilizer cannot be obtained using the described method.
The prior art discloses a fermentation liquid from organic waste from fish farms and a method for fermenting it (KR20030020766 A), which is obtained by inoculating solid wastes generated from fish farms with photo-synthetic microbes.
A method for preparation thereof comprises the following steps: grinding feed wastes and precipitates generated from fish farms; adding water in a volume ratio of grounds to water of 1:9-3:7; inoculating 5-10 % (v/v) of prepared waste-ground solution with photosynthetic microbes (10⁹ cells/ml) such as *Rhodopseudomonas palustris, Rhodobacter sphaeroides, Rhodospirillum rubrum* and *Rhodobacter capsulata*; fermenting at 28-32 °C for 5-10 days under light intensity of 4000-5000 lux (or 1000 lux when the grinding rate is high) without oxygen supply and pH control; and filtering to remove undecomposed materials like scales.
Another preparation method of fermentation liquid comprises the steps of: adding nutrients like molasses and unrefined sugar to the ground solution in a ratio of 2-4 % (w/v); inoculating the waste-ground solution with mixed microbes containing photosynthetic (10⁹ cells/ml) microbes, lactic (10⁹ cells/ml) ferments, and yeast 10⁴ cells/ml) in a ratio of 6:3:1; fomenting at 37-39 °C for 5-10 days without oxygen supply and pH control until the liquid reaches the pH 3.5-4.0; and filtering.
Disadvantages of the method for obtaining the known fermented liquid are the complexity of the technological process and its high energy consumption (fermentation at 37-39 °C for 5-10 days).
The prior art discloses an organic fertilizer and a method for producing the same (WO2012085647A1). The fertilizer has physicochemical properties typical of solid (loose) fertilizer and is suitable for effective soil conditioning and providing structure to poor soil.
A method for producing this solid organic fertilizer comprises the following steps: providing the raw materials comprised of sugar milling press mud, sugar millings fiber bagasse and boiler ash; forming windrows; wetting the windrows and leaving them to repose for a specific period; spraying the windrows with microbial inoculant; spraying the windrows with water to maintain the moisture content of at least 40%; adding rock phosphate to each windrow; turning each windrow at least once per week; maintaining the optimum temperature (55-65 °C) and moisture of each windrow; leaving windrows to repose after the internal temperature drops below optimum temperature and does not reheat after spraying and turning; drying the compost to 20-30% moisture; adding liquid nitrogen in 12-18 weeks before screening of the organic fertilizer. A liquid bioorganic fertilizer cannot be obtained using this method.
The prior art discloses soil conditioners (US4985060A). The soil conditioner of the present invention mainly comprises 4 to 4.75 parts by weight of coal ash, 4 to 4.75 parts by weight of slag, and 0.5 to 2 parts by weight of zeolite, and in addition to inorganic materials, may contain microorganisms and 0.2 to 2% by weight of molasses based on the total weight of coal ash, slag, and zeolite.
It is prepared by homogenizing a mechanical mixture of the said ingredients in solid form, taken in different ratios. A liquid bioorganic fertilizer cannot be obtained using this method. The prior art discloses a method for increasing efficiency and environmental impact by combining technical inorganic chemistry and biotechnology in biogas plants with bacterial cultivation and natural neutralization (DE 10 2008 031805 A1 (ORTLOFF HELENE [DE]).
The invention generally relates to a device for increasing the efficiency of biogas plants, in which crystalline cellulose is decomposed by acids and alkali in a preliminary fermenter. The device is characterized in that the basic pH of the preliminary hydrolysis of acidic bacteria is neutralized during hydrolysis, and the soil climate is improved due to the addition of bacteria and fungi.
It is impossible to use a biogas plant to produce a liquid bioorganic fertilizer in the described manner.

The closest method to the proposed in the present invention method for obtaining a liquid utility form of bioorganic fertilizer, in a technical sense and the resulting outcome, is the method for obtaining a plant growth and development biostimulant from of humus-containing substances (patent RU 2253641 - the closest analogue - a prototype). The method includes the obtaining of water extract of substances containing humus and then microbiological fermentation with an increase in the water extract of biomass amount of soil micro-organisms. The process is carried out within 3-24 hours at a temperature 20-35°C and with continuous aeration. The resulting slurry is allowed to stand, the enriched water extract is separated from the deposits. The alkaline extraction of the deposits is carried out with 0.02-0.3 mol/dm³ alkaline solution at 60-100°C. The resulting alkaline extract is neutralized with nitric acid to the pH 8.0-9.5. The enriched water extract is added to the neutralizer, it is stirred, left to stand and a liquid target product is obtained as a result.

Disadvantages of the closest analogue (a prototype) - of the method of obtaining of a liquid organic fertilizerare as follows:
- the impossibility to use the fertilizer obtained according to the above method in organic farming, because inorganic compounds are used in order to obtain a/m fertilizer (bases, nitric acid);
- high energy consumption of the technological process due to prolonged phase of increasing of soil micro-organisms biomass amount (up to 24 hours) and high temperature of alkaline extraction (60-100°C);
- need for using of special equipment and security measures for the implementation of the high-temperature alkaline extraction;

- lack in the finished product of effective microorganisms balanced according to the generic composition comprising the following dominant genera: lactic fermentation bacteria *Lactobacillus plantarum* and *Lactobacillus casei,* photosynthetic bacteria *Rhodopseudomonas palustris* and yeast *Saccharomyces cerevisiae;*
- presence of useful soil micro-organisms together with pathogenic microflora in the finished product;
- low concentration of finished formulation due to the additional step of treating the deposit with water after the alkaline extraction;
- limited functional possibilities of the finished product, because the value of its pH is 8.0-9.5.

The present invention was developed in order to remove the defects listed in the closest analogues (prototypes) of the bioorganic fertilizer, its liquid utility form and also the methods of their obtaining.

The object of the present invention is to develop compositions and methods for obtaining high effective liquid bioorganic fertilizer, useful in organic farming, ensuring the obtaining high crops of ecologically clean products, optimization of the absorption of mineral nutrients by the crops, clearing soil from harmful substances and pathogenic micro-organisms, rebuilding the soil and reducing chemical burden of agricultural lands and at the same time an industrial-scale utilization of poultry and animal breeding waste.

The object of the present invention, as described in claim 1, is to:
- receive a liquid form of the bioorganic fertilizer, useful in organic farming and comprising, in addition to a set of mineral nutrients, effective micro-organisms balanced according to the generic composition, ensuring a microbiological diversification and a high content of biologically active substances, allowing its use to improve plant growth and development, and also in order to activate soil microbiological processes and the synchronization of the function of the micro-organism cenose of the soil damaged by human activities, by ensuring bacterio- and fungistasis;
- develop of energy-efficient, technologically and environmentally safe method of receiving the liquid utility form of the bioorganic fertilizer with a high concentration and functionality, comprising effective micro-organisms balanced according to the generic composition, while it does not contain pathogenic microflora.

The solution of the designated task is achieved by the fact that the liquid utility form of the bioorganic fertilizer, proposed in the present invention, in addition to a set of mineral nutrients for plants in the proportion of wt. %: total nitrogen - 0.9 - 4.1, including ammonia nitrogen 0.4 - 1.3, total phosphorus (P₂O₅) - 0.4 - 4.2, total potassium (K₂O) - 0.6 - 4.6; mg/kg: calcium - 76.43 - 99.81, magnesium - 38.52 - 44.76, iron - 12.30 - 18.34, copper - 0.44 - 0.67, manganese - 1.12 - 1.35, zinc - 1.17 - 1.62, aluminium - 8.21 - 12.3, it additionally contains effective micro-organisms balanced according to the generic composition comprising the following dominant genera, in the proportion CFU/ml: lactic fermentation bacteria *(Lactobacillus plantarum >* 1.0 × 10² - 1.0 × 10⁴, *Lactobacillus casei >* 0.1 × 10² - 0.1 × 10⁴), photosynthetic bacteria *(Rhodopseudomonas palustris >* 0.2 × 10² - 0.2 × 10⁴), yeast (*Saccharomyces cerevisiae* > 0.3 × 10² - 0.3 × 10⁴, biologically active substances in the amount at least 80% comprised in the starting bioorganic fertilizer, as well as water-soluble humates (at least 3500.0 mg/l) and fulvates (at least 1500.0 mg/l).

The technical result is achieved by the method according to claim 1. The method comprises:
- water extraction of a set of mineral nutrients, effective micro-organisms, biologically active substances contained in the starting raw material, which is the bioorganic fertilizer developed by the Inventor and described above in the present invention;
- alkaline extraction of humic substances of the bioorganic fertilizer with solution of water extract of plant ash;
- neutralization of the alkaline extract with citric acid;
- inhibition of fermentation processes with sorbic acid.

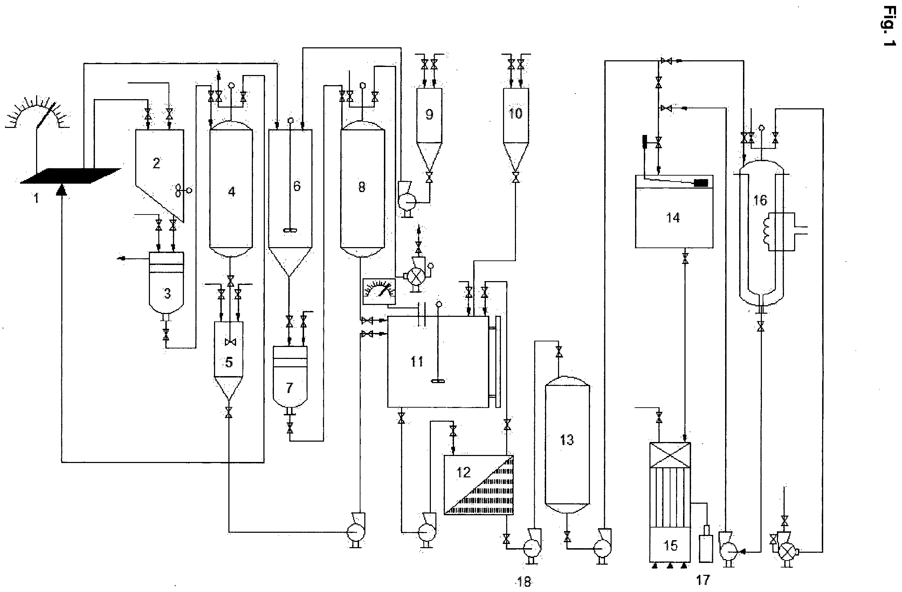

Technological scheme of all stages of the process of receiving the liquid utility form of the bioorganic fertilizer is given in the Figure 1.

According to the accompanying diagram in Fig. 1, in order to receive the liquid utility form, the portion of the starting bioorganic fertilizer is weighed on the scale 1 and fed to an extractor 2, equipped with a mixer. The non-chlorinated water at 20-40⁰C in the amount of 3-5 litres of water for every kg of the bioorganic fertilizer is fed to the extractor. The water extraction is carried out at 20-40⁰C with simultaneous periodic stirring within 1-3 hours.

After finishing the extraction, a water suspension is allowed to stand within 1.0 - 1.5 hours. The extract, containing the effective micro-organisms and water-soluble compounds, is decanted and collected in a tank 4 of water extract.

The deposit, containing water-insoluble fraction, is fed to a hydrolyser 6, where the alkaline extraction of humic substances is conducted. The ratio of deposit : solution = 1:5 -1:10. The extraction is carried out at 20-40°C within 10-16 hours with simultaneous periodic stirring. As the alkaline solution, 3.0-8.0% water solution of plant ash is used. It is prepared in the container 9 for the alkaline extract, by extracting a water soluble part of the plant ash with water.

The liquid fraction, obtained after standing within 1.0-1.5 hours, is decanted and pumped to the tank-reservoir 8 for alkaline extract. To the deposit in a hydrolyser a 3.0-8.0% solution of aqueous extract of plant ash is added and re-extraction of humic substance is carried out in the same conditions (10-16 hours, 20-30°C, the proportion of deposit : alkaline extractant = 1:5-1:10).

The resulting alkaline hydrolyzate is directed to a filtering-drying apparatus nutsche filter type 7, the filtrate of which is pumped to the neutralizer 11. To the neutralizer an alkaline extract from the tank-reservoir 8 is fed and the computational amount of sorbic acid (10-15 mg/l) and crystalline citric acid from the dispensing container 10 is added during stirring to obtain a solution of pH 6.5-7.5.

To the neutralizer 11 containing neutralized alkaline extract, an aqueous extract from the reservoir 4 is pumped during stirring.

The resulting solution is fed by a centrifugal pump 18 to a filtering device 12. The filtered finished product is collected in a reservoir 13, from which it is fed through the compensator, equipped with control valve 14 to the automatic dosing and pouring machine 15 and then it is poured into dark-coloured containers 17.

The resulting product contains 1.3-3.1% of completely dry matter.

In order to obtain the more concentrated target product, the filtrate from the tank 13 is fed to the vacuum evaporation device 16, in which it is treated at 30-40°C within 8-20 hours. The concentrated product is fed from a vacuum-evaporation unit 16 through the compensator, equipped with control valve 14 to the automatic dosing-pouring machine 15. The product is poured into dark-coloured containers 17.

The concentrated product is obtained with a dry substance content of 15-20%.

Thus, the proposed method enables the production of two types of liquid utility form of the bioorganic fertilizer with different contents of dry matter: a - 1.3-3.1%, b - 15-20%.

According to developed waste-free technology the deposit from filtering-drying apparatus of nutsche filter 7 type is used as a fertilizing paste for acidic soils.

For the production of the utility form of the bioorganic fertilizer proposed according to the present invention is not required specialized equipment and it can be implemented on the currently operating technological lines.

The test results of liquid utility form of the bioorganic fertilizer obtained, conducted at the Ukrainian Laboratory of Quality and Product Safety of Agro-Industrial Complex (certificate of approval No. PT-0110/07 of 27.04.2007) are given in Table 8 (a test protocol No 0298-U of June 20, 2011).

**Table 8**

| Th e test results of the liquid utility form of bioorganic fertilizer | |
|---|---|
| Name of indicators, measurement units | Liquid bioorganic fertilizer received in the farming household "Chervone" (Kyiv circuit, Makarovski district, Andrejevka village) |
| Total nitrogen, wt. % | 0.9 - 4.1 |
| Ammonia nitrogen, wt. % | 0.4-1.3 |
| Total phosphorus (P₂O₅), wt. % | 0.4 - 4.2 |
| Total potassium (K₂O), wt. % | 0.6 - 4.6 |
| calcium, mg/kg | 76.43 - 99.81 |
| magnesium, mg/kg | 38.52 - 44.76 |
| iron, mg/kg | 12.30 - 18.34 |
| copper, mg/kg | 0.44 - 0.67 |
| manganese, mg/kg | 1.12 - 1.35 |
| zinc, mg/kg | 1.17 - 1.62 |
| sodium, mg/kg | 80.17 - 114.50 |
| aluminium, mg/kg | 8.21 - 12.31 |
| nickel, mg/kg | 0.15 - 0.18 |
| cadmium, mg/kg | 0.004 - 0.006 |
| chromium, mg/kg | 0.52 - 0.60 |
| lead, mg/kg | 0.06 - 0.09 |
| Exchange acidity, units pH | 6.5-7.5 |
| Soluble in water, mg/l: | |
| - humates; | at least 3500.0 |
| - fulvates; | at least 1500.0 |
| *Lactobacillus plantarum,* CFU/ml | > 1.0 × 10² - 1.0 × 10⁴ |
| *Lactobacillus casei,* CFU/ml | > 0.1 × 10² - 0.1 × 10⁴ |
| *Saccharomyces cerevisiae,* CFU/ml | > 0.3 × 10² - 0.3 × 10⁴ |
| *Rhodopseudomonas palustris,* CFU/ml | > 0.2 × 10² - 0.2 × 10⁴ |

The test results of the liquid utility form of the bioorganic fertilizer, obtained according to the proposed method, concerning the content of the biologically active substances, showed that the enzymes, amino acids, organic acids, polysaccharides and lipides are extracted from the starting bioorganic fertilizer in the proportion 80-85%.

Evaluation of the effectiveness of using the submitted liquid utility form for cultivation of the seedlings of Scots pine (*Pinus sylvestris L*.) was carried out in the forest nursery production conditions: Kostopolskiy Branch of Forest Holding "Rownoles", Piskovskiy, Mirchanskiy forest district, Teterevskiy Experimental Production State Forest Farm, Krylovskiy and Buzanovskiy forest district of Kamen-Kashyrskiy Specialistic Forestry Enterprise.

As a test object the liquid utility form of the bioorganic fertilizer was used, a description of which is given in Table 8 and in Examples 7-11. Pre-seed dressing of a first-class winter crops was carried out by soaking in solutions diluted in proportion 1:70, 1:100. Duration of dressing was 16-18 hours.

The test scheme presumed a comparison of the effectiveness of the submitted liquid utility form of the bioorganic fertilizer with the traditionally one used for pre-seed dressing of seed with the organic formulation solution - fundazol [Novoseltseva A.I. The work in forest nurseries. M.: Lesnaya promyshlennost, 1981. - 72 p.]. The seedlings, obtained from seeds without pre-dressing, were used as a control group.

The test results are shown in Tables 9-11.

**Table 9**

| The effectiveness of the liquid utility form as a fungicide to prevent Fusarium wilt of seedlings of Scots pine (Pinus sylvestris L.) | | | | | | |
|---|---|---|---|---|---|---|
| Test variant | The composition of the liquid utility form (Dilution 1:70) | Number of seedlings which were taken ill, pieces for 1000 germinations | | | | |
| | | for day 15 | for day 30 | for day 45 | for day 60 | total % fusarium wilt |
| 1. | Corresponds to Example 7 | 38 | 72 | 97 | 97 | 9.7 |
| 2. | Corresponds to Example 8 | 46 | 68 | 105 | 105 | 10.5 |
| 3. | Corresponds to Example 9 | 52 | 77 | 98 | 98 | 9.8 |
| 4. | Corresponds to Example 10 | 49 | 94 | 126 | 126 | 12.6 |
| 5. | Fundazol (50% solution) | 53 | 88 | 187 | 187 | 18.7 |
| 6. | Control | 112 | 259 | 436 | 437 | 43.7 |

Analysis of the data, stored in the Table 9, showed that the most resistant to lodging were pine seedlings, seeds of which were dressed with a solution of the liquid utility form (variants 1-4). In this case, the percentage of seedlings, attacked by fusariosis, was 9.7-12.6%, which is 1.5-1.9 times less than for dressing of seeds with fundazol solution, and 3.5-4.5 times less in comparison to the control.

Inventory inspection of one year old pine seedlings showed a significant difference in biometric indicators of the seedlings, grown from seeds, dressed with solutions of liquid utility form, fundazol and controls (Table 10).

**Table 10**

| Biometric indicators of Scotch pine seedlings *(Pinus sylvestris L.)* | | | | | | | |
|---|---|---|---|---|---|---|---|
| Test variant | The composition of the liquid utility form | Size of seedlings, cm | | | | | |
| | | root | | | green top | | |
| | | minimal | maximal | medi um | minimal | maximal | mediu m |
| 1. | Corresponds to Example 7 | 7.2 | 14.2 | 10.7 | 17.6 | 26.2 | 21.9 |
| 2. | Corresponds to Example 8 | 6.9 | 13.1 | 10.0 | 16.3 | 25.1 | 20.7 |
| 3. | Corresponds to Example 9 | 7.0 | 13.4 | 10.2 | 16.7 | 25.3 | 21.0 |
| 4. | Corresponds to Example 10 | 6.7 | 13.1 | 9.9 | 16.9 | 25.7 | 21.3 |
| 5. | Fundazol (50% solution) | 5.9 | 11.1 | 8.5 | 12.1 | 17.3 | 14.7 |
| 6. | Control | 5.5 | 10.5 | 8.2 | 8.5 | 11.7 | 10.1 |

Data of Table 10 showed that sizes of green tops and root system of seedlings in all variants with the liquid utility form exceeded similar indicators in a control variant and in a variant with fundazol: depending on sizes of green top 2.1-2.2 and 1.4-1.5 times, respectively; according to sizes of root system of seedlings 1.2-1.3 and 1.1-1.2 times.

The results of calculations of standard seedling performance (after scaling to 1 ha) are given in Table 11. Maximum capacity of standard seedlings (96.2 - 98.5%) was set for dressing of seeds with solution of the liquid utility form (variants 1-4), minimal (67.6%) - for control one.

**Table 11**

| The capacity of standard seedlings from unit of area | | | | | | |
|---|---|---|---|---|---|---|
| Test variant | Area of experime ntal plot, ha | Average number of seedlings on area, thousands of pieces | | Average number of seedlings on 1 ha, thousands of pieces | | Capacity of the standard seedlings of 1 ha, % |
| | | total | including standard | total | including standard | |
| 1. | 0.15 | 252.4 | 248.7 | 1682.7 | 1658.0 | 98.5 |
| 2. | 0.15 | 238.8 | 229.7 | 1592.0 | 1531.3 | 96.2 |
| 3. | 0.15 | 242.7 | 236.1 | 1611.3 | 1574.0 | 97.7 |
| 4. | 0.15 | 244.2 | 239.7 | 1628.0 | 1598.0 | 98.2 |
| 5. | 0.15 | 223.8 | 194.6 | 1492.0 | 1297.3 | 87.0 |
| 6. | 0.50 | 256.2 | 209.1 | 512.4 | 346.4 | 67.6 |

Production test results obtained (Table 9-11) interchangeably show the effectiveness of the liquid utility form not only as a bioorganic fertilizer, but also as a formulation, having fungicide feature for screen dressing of seeds.

The objectivity of the technical result, obtained by applying the liquid utility form of bioorganic fertilizer, is also confirmed by field trials data on vegetable crops, conducted by the Ukrainian Laboratory of Quality and Product Safety Agro-Industrial Complex, an approved in Ukrmetrteststandard. The trials were conducted in training-experimental of The University of Life and Environmental Sciences of Ukraine "Velikosnitynskoye" of the Kyiv region, the Fastov area (soil and climate zone - forest steppe). For foliar supply of cucumbers, tomatoes and potatoes was used a liquid utility form, the composition of which matches that given in Table 8 and the Examples 7-9. During vegetation period was carried out 3 feeding: in gemmation phase and subsequently every 10-15 days. The dose of the formulation consumption was of 2 I/ha, the working solution volume - 140-200 l (dilution 1:70 - 1:100).

The results are given in Table 12.

**Table 12**

| Impact of the submitted liquid utility form of the organic fertilizer on harvest and quality of vegetable plants | | | | | |
|---|---|---|---|---|---|
| Variant | Fertility, t/ha | Growth | | Dry matter, % | N - NO₃, mg/kg of raw mass |
| | | t/ha | % | | |
| Cucumbers "Visconsin" species | | | | | |
| Liquid utility form of the bioorganic fertilizer | 24.0 | 7.0 | 41.2 | 4.6 | 36.1 |
| Control (without the use of the fertilizer) | 17.0 | - | - | 3.9 | 42.8 |

| Hybrid tomatoes "Bella rosa F1" | | | | | |
|---|---|---|---|---|---|
| Liquid utility form of the bioorganic fertilizer | 52.3 | 14.3 | 37.6 | 6.7 | 29.5 |
| Control (without the use of the fertilizer) | 38.0 | - | - | 5.1 | 34.6 |

| Potatoes "Serpanok" species | | | | | Starch content, % |
|---|---|---|---|---|---|
| Liquid utility form of the bioorganic fertilizer | 33.4 | 11.4 | 51.8 | 26.5 | 13.8 |
| Control (without the use of the fertilizer) | 22.0 | - | - | 17.0 | 10.0 |

Analysis of the data obtained (Table 12) showed that foliar feeding of cultivated plants with the liquid utility form of the bioorganic fertilizer increases not only their fertility, but also biological value: the content of nitrates is reduced, dry mass content and starch content in potatoes is increased.

Use the liquid utility form of the bioorganic fertilizer in breeding technology of cultivated and ornamental crops provides the following positive effects:
- increases germination capacity and germination energy of seeds,
- stimulates growth of plant roots,
- favours fast rooting of grafts,
- stimulates growth and accelerates plant development,
- reduces content of nitrates in fruits and vegetables,
- makes difficult penetration of heavy metals and radio nuclides into plants,
- increases contents of sugars, starches, proteins and vitamins,
- eliminates chlorosis and stimulates flowering and fructification,
- increases the resistance of plants to diseases,
- increases quality of crops and prolongs periods of their storage,
- accelerates maturation of crops of full value by about 2-3 weeks.

In Table 13 is presented justification of choosing the technological parameters of the method for obtaining liquid utility form of the bioorganic fertilizer.

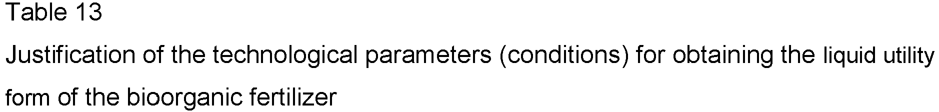

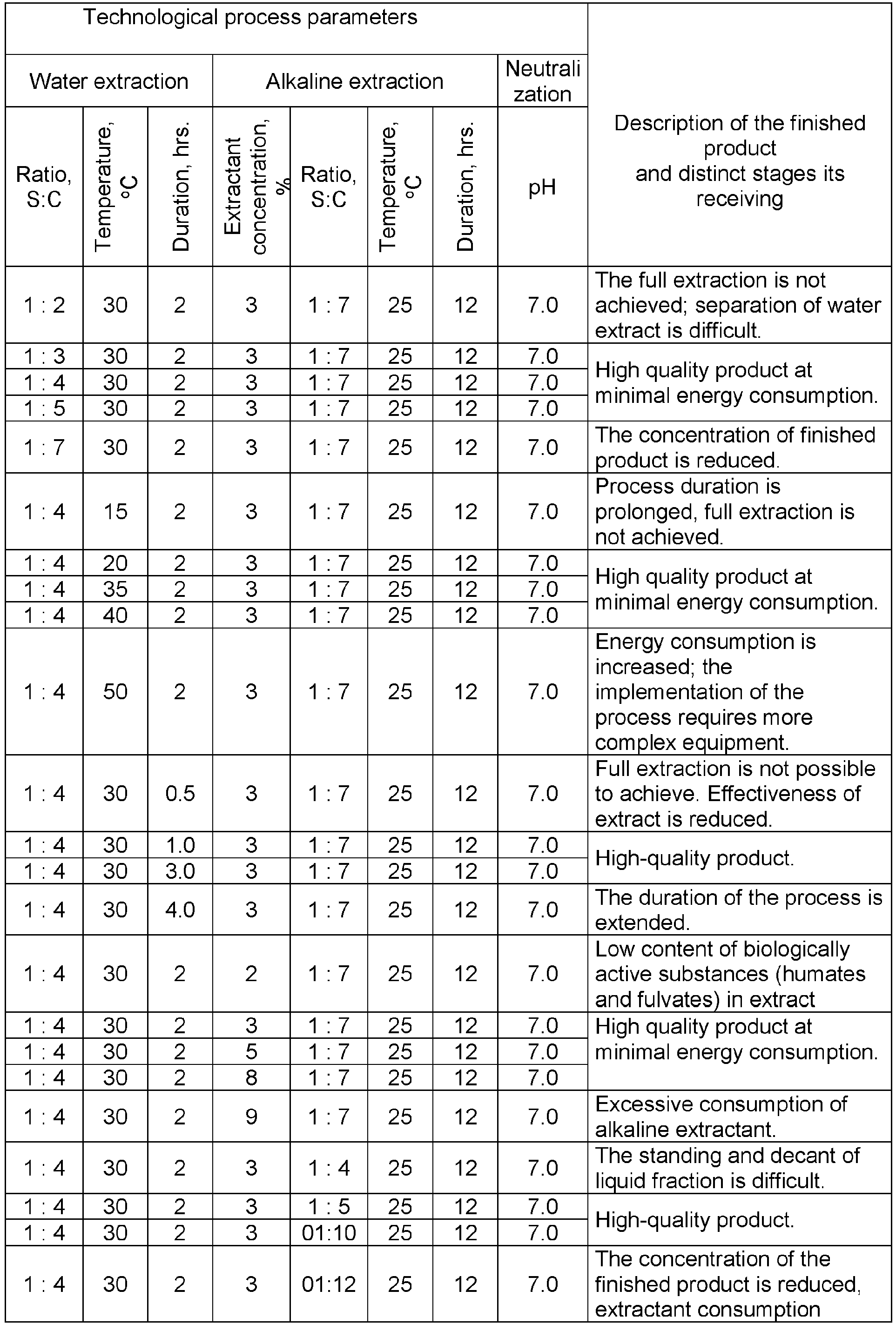

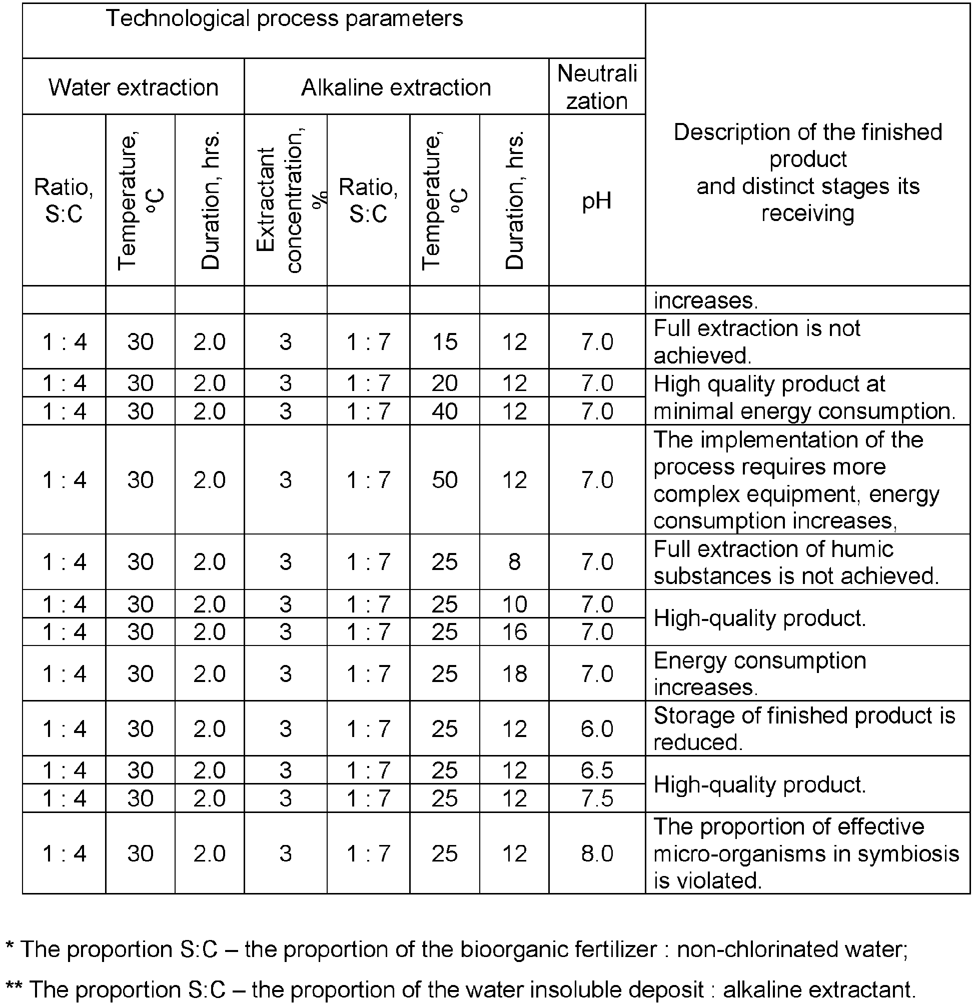

According to the closest analogue (prototype) a liquid fertilizer is received from substances, containing humus in following conditions:
- a water extraction (with increase of soil micro-organisms biomass) within 3-24 hours at a temperature 20-35°C and continuous aeration;
- alkaline extraction 0.02-0.3 mol/dm³ with alkaline solution at a temperature 60-100°C;
- neutralization with nitric acid to a level pH 8.0-9.5.

According to data of Tables 8-13, describing mutual influence of basic technological parameters (conditions) of receiving the liquid utility form of the bioorganic fertilizer on indicators of its quality and effectiveness, results that in order to implementation of energy-efficient, technologically and ecologically safe production the target is to carry out the process in following optimal conditions:
- starting raw material - the bioorganic fertilizer, that contains effective microorganisms balanced according to the generic composition;
- water extraction - temperature 30°C, duration 2 hours, the proportion of the starting raw material and extractant (bioorganic fertilizer : non-chlorinated water) = 1:4;
- alkaline extraction - the concentration of the alkaline extractant solution - water extract from plant ash - 5%, temperature 25°C, duration 12 hours, the proportion of the water insoluble deposit : extractant = 1:7;
- neutralization with crystalline citric acid to pH 7.0;
- inhibition of fermentation processes with sorbic acid (the calculated amount of the sorbic acid - 10-15 mg/l).

Failure even one of the conditions given in Table 13 does not allow to obtain highly effective liquid utility form, containing set of mineral nutrients, effective micro-organisms balanced according to the generic composition and biologically active substances.

The submitted method of preparing the liquid utility form of the bioorganic fertilizer useful in organic farming differs from the prototype method (RU 2253641,- the closest analogue - prototype) in that:
- all substances that are used for preparing the liquid utility form have exclusively organic and biological nature;
- as a starting raw material is used the bioorganic fertilizer of a new generation, containing effective micro-organisms balanced according to the generic composition,;
- the water extraction of set of nutrients, effective micro-organisms and biologically active substances contained in the starting raw material, is carried out within 1-3 hours in a temperature 20-40⁰C and the proportion of the starting raw material : water = 1:3 - 1:5;
- it is not required increasing amounts of biomass of effective micro-organisms, which are present in the starting raw material in sufficient quantities. In the prototype method the soil micro-organisms (both useful and pathogenic) are extracted with water from substrates, containing humus and the increase of their biomass is carried out within 3-24 hours in a temperature 20-35°C and at continuous aeration;
- 3.0-8.0% water solution of plant ash extract is used as an extractant for alkaline extraction of humic substances (the proportion of the water-insoluble deposit : extractant = 1:5-1:10, temperature 20-40°C, duration period 10 - 16 hours). In the prototype method the alkaline extraction is carried out with 0.02-0.3 mol/dm³ alkaline solution (potassium, sodium or Lithium) at increased temperature - 60-100°C;
- neutralization of the alkaline extract is carried out with a citric acid to pH 6.5-7.5. In the prototype method the extract is neutralized with nitric acid to a level pH 8.0-9.5;
- inhibition of fermentation processes in the finished product is carried out with sorbic acid. This step is not provided in the prototype method;
- it is ensured the implementation of energy-efficient, technologically and ecologically waste free production;
- using of special equipment and security measures, necessary during high-temperature alkaline extraction, is not required.

Thanks to implementation of distinctive features of the present invention (together with features presented in the preamble part of claims) new important properties of liquid bioorganic fertilizer, and also new energy-efficient and ecologically safe technologies are achieved.

Hereafter are presented concrete examples of embodiments of the disclosed liquid bioorganic fertilizer, according to presented method, and also test results of their effectiveness. The examples are only illustrative and not limit the present invention.

### Example 1 - not according to the invention

In order to receive 10 t of the bioorganic fertilizer, a technological clamp is formed of height 1.6 m, width 3.0 m, through laying down in sequence layers of 4.5 t of fresh duck manure, containing up to 10% sawdust and 4.5 t shredded low peat (the ratio of the duck manure : peat = 4.5:4.5). The layers with a height of 0.4 m each are arranged, starting with peat, in the open air, and on even hard surface.

Formed clamp is sprayed with 1000 l diluted activated microbiological formulation (consumption standard corresponds the proportion of the diluted activated microbiological formulation : duck manure and peat = 1:9) using aerator-haymaker GK 3000 type equipped with reservoir with spraying machine and mechanisms for mixing of fertilizer components. The diluted activated microbiological formulation is prepared by mixing 12.5 l of the activated microbiological formulation and 987.5 litres non-chlorinated water (ratio 1:80). Simultaneously with the addition of the diluted microbiological formulation, the aerator mixes the mixture of the duck manure and peat. A quantitative using of the aerator is defined by a temperature and humidity of components of the mixture of the duck manure and peat inside clamp, which are controlled within the entire technological process. Next and subsequent mixing and hydration (aeration) are carried out to maintain optimum low temperature conditions (28-37°C) and humidity of the mixture components (45-65%). Within 40 days technological process are carried out four aerations. After 40 days since clamp formation the bioorganic fertilizer achieves a satisfactory maturity level.

The bioorganic fertilizer has homogeneous free flowing loose structure, humidity 45% and pH7 of composition, wt. %: total nitrogen - 5.8 - 6.1, total phosphorus (P₂O₅) - 4.3 - 5.2, total potassium (K₂O) - 4.0 - 4.7, calcium 8.1 - 8.9, magnesium - 2.0 - 2.2; mg/kg iron - 670 - 820, copper - 128 - 132, manganese - 60 - 89, zinc - 138 - 164, effective micro-organisms in the proportion: *Lactobacillus plantarum >* 9.4 × 10⁴ CFU/ml, *Lactobacillus casei >* 8.4 × 10³ CFU/ml, *Saccharomyces cerevisiae* > 2.1 × 10⁴ CFU/ml, *Rhodopseudomonas palustris >* 1.9 × 10⁴ CFU/ml and biologically active substances, including
- enzymes: protease 78-81 of gelatine units /10 g/40 hours, urease - 50-65 mg N - NH /10 g/24 hours, phosphatase - 62-67 mg P₂O₅ mg/10 g/24 hours, catalase - 3 56-61 cm O2/minute/g, dextranase - 27-51 mg glucose/g/5 days, invertase - 123-134 mg glucose/100 g/18 hours, glucose oxydase - 19-24 micromol of glucose/1g/24 hours;
- polysaccharides - 0.09-0.11 wt. %, including easy for hydrolyze 22-29% of the total amount: neutralized 28%, acid (polyuronides) 15.8 - 17%, monosaccharides - 18.4 - 23.6%; - lipids - 0.28-0.32 wt.%; amino acids 0.37-0.41wt.%, including mg/g of dry matter substances: lysyne - 2,2-2,4; histidine - 0,7-0,8; arginine - 2,5-2,7; threonine - 4,9 - 5,4; valine - 2,8-2,9; - methionine - 2,7-2,9; isoleucine - 5,9-6,2; leucine - 4,4-4,5; phenylalanine - 3,5-3,7; aspartic acid - 3,2-3,4; serine - 0,01-0,03; glutamic acid - 3,5-3,7; proline - 0,005-0,007; glycine - 2,0 -2,2; alanine - 3,3-3,4; cystine - 2,1-2.2, tyrosine - 1,2-1,5, tryptophan - 0,05-0,07, cysteine - 1.7-2.0, hydroxylysyne - 0.8-1.2, hydroxyproline - 0.001-0.005; - organic acids, wt.% - 4.4-4.7%, including lactic acid and succinic acid - 2.7-3.1; - vitamins, micrograms/g of dry matter substances - 0.07-0.09, including niacin - 0.011-0.019, nicotinic acid - 0.009-0.063, folic acid - 0,011-0.072; - humus substances, wt. %: humic acids - 7.8-7.9, fulvic acids - 3.5-3.7.

The effectiveness of obtained bioorganic fertilizer was established during production tests of sugar beet. Fertilizing dose was 2.5 t/ha for three methods of soil cultivation: common known ploughing (27-30 cm), protective cultivation at deep opening without overturning (27-30 cm) and protective cultivation at shallow opening without overturning (10-12 cm).

The results obtained showed that the use of the submitted bioorganic fertilizer provides 1.7-2.0 times larger sugar harvest than during the application of the prototype fertilizer.

### Example 2 - not according to the invention

The clamp is formed similarly as in Example 1, using 5.0 t of fresh chicken dung, containing up to 10% sawdust, and 4.0 t shredded transition peat (a ratio chicken dung_: peat = 5.0:4.0).

The formed clamp is sprayed, simultaneously with mixing, with 600 l diluted activated microbiological formulation (consumption standard corresponds to a ratio of the diluted activated microbiological formulation : chicken dung_and peat mixture = 1:15). The diluted activated microbiological formulation is prepared by mixing 1.5 l of the activated formulation and 598.5 litres non-chlorinated water (ratio 1:400). Further operations are carried out similarly as was given in Example 1. Duration of the technological process was 43 days, a number of aerations - 5. After 43 days since clamp formation the fertilizer has a satisfactory maturity level.

The obtained bioorganic fertilizer has homogeneous free flowing loose structure, humidity 55%, pH 6.9. The composition of the fertilizer, wt. %: total nitrogen - 5.9 - 6.2, total phosphorus (P₂O₅) - 4.5 - 5.1, total potassium (K₂O) - 4.1 - 4.9, calcium 6.8 - 7.3, magnesium - 1.9 - 2.1; mg/kg: iron - 678 - 880, copper - 136 - 139, manganese - 63 - 74, zinc - 161 - 182; effective micro-organisms in the proportion, CFU/ml: *Lactobacillus plantarum >* 4.7 × 10³, *Lactobacillus* casei > 5.6 × 10², *Saccharomyces cerevisiae >* 9.2 × 10², *Rhodopseudomonas palustris >* 6.3 × 10² and biologically active substances, the composition of which is analogous to that presented in the Example 1.

Taking into account the composition of the bioorganic fertilizer obtained, during planting and cultivation of ornamental and forest plants, most effective are following fertilization doses:
A) for coniferous trees:
   - in planting 10-12 kg into pit of size 0,8m x 0,8m x 0,6m. Subsequent systematic every year fertilization 2-3 t/ha to bowls at tree trunks in spring during first soil cultivation, summer cultivation and autumn cultivation in first decade of the September.
   - in the container technologies: - 1/4 - 1/5 part of the substrate volume.
B) for deciduous trees:
   - in planting 12-16 kg into pit of size 0,8m x 0,8m x 0,6m. Subsequently similarly as for coniferous trees but with a dose 3-5 t/ha.
   - in the container technologies: - 1/3 - 1/4 part of the substrate volume.

### Example 3 - not according to the invention

In order to obtain 10 t of the bioorganic fertilizer, the clamp is formed of 4.0 t of fresh horse manure and 5.0 t of shredded low peat (the ratio horse manure_: peat = 4.0 : 5.0). Subsequent operations are carried out similarly as in Example 1, using for spraying 900 l of the diluted activated microbiological formulation (9.0 l activated microbiological formulation and 891.0 l of a non-chlorinated water, the proportion 1:100). The consumption standard of the diluted microbiological formulation to the mixture of the horse manure and peat corresponds to the proportion = 1:10. Duration of the technological process was 41 days, the number of aerations - 5.

The obtained bioorganic fertilizer had homogeneous free flowing loose structure, humidity 50%, pH 7.2. The composition of the fertilizer, wt. %: total nitrogen - 4.3 - 4.9, total phosphorus (P₂O₅) - 3.2 - 3.5, total potassium (K₂O) - 3.0 - 3.3, calcium 6.7 - 7.2, magnesium - 1.9 - 2.0; mg/kg: iron - 610 - 625, copper - 125 - 128, manganese - 61 - 65, zinc - 183 - 207; effective micro-organisms in the proportion, CFU/ml: *Lactobacillus plantarum >* 7.3 × 10⁴, *Lactobacillus casei >* 7.1 × 10³ , *Saccharomyces cerevisiae >* 1.9 × 10⁴, *Rhodopseudomonas palustris >* 1.6 × 10⁴ and biologically active substances the composition of which is analogous to that presented in the Example 1.

During application of the bioorganic fertilizer to planting and cultivation of berry plants (currant, gooseberry, grapes etc.) most effective were following fertilizing doses:
- in planting into holes in rows 5-10 kg/hole;
- in the period from planting shrubs to fruiting during the first 1-3 years - 1-2 t/ha to bowls at the base of plants in the spring during the first cultivation of the soil, summer and autumn crop treatments in the first decade of the September;
- in a period of full fruiting - 3-4 t/ha to bowls at the base of plants in the same periods.

### Example 4 - not according to the invention

The clamp is formed similarly as in Example 1 using 4.5 t of fresh pig manure and 4.5 t shredded low peat (a ratio pig manure : peat = 4.5:4.5). Subsequent operations are carried out according to Example 1, at the same parameters of the technological process:
- a dilution of activated microbiological formulation 1:50 (22.5 l of activated microbiological formulation and 1102.5 l non-chlorinated water);
- the consumption standard of diluted activated microbiological formulation - the proportion of the diluted microbiological formulation : pig manure and peat mixture = 1:8;
- a temperature inside the clamp 28-37°C;
- a humidity of mixture components in clamp 45-65 %;
- a number of aerations - 4;
- the duration of the technological process - 38 days.

A bioorganic fertilizer is obtained having homogeneous free flowing loose structure, humidity 55%, pH 6.8. The composition of the fertilizer, wt. %: total nitrogen - 1.5 - 1.7, total phosphorus (P₂O₅) - 0.9 - 1.1, total potassium (K₂O) - 1.0 - 1.3, calcium 6.5 - 6.7, magnesium - 1.9 - 2.1; mg/kg: iron - 840 - 860, copper - 143 - 150, manganese - 87 - 92, zinc - 142 - 156; effective micro-organisms in the proportion, CFU/ml: *Lactobacillus plantarum >* 1.2 × 10⁵, *Lactobacillus casei* > 3.2 × 10⁴ , *Saccharomyces cerevisiae* > 6.8 × 10⁴, *Rhodopseudomonas palustris >* 4.1 × 10⁴ and biologically active substances the composition of which is analogous to that presented in the Example 1.

During application of the bioorganic fertilizer obtained in setting and cultivation lawns the most effective were following fertilizing doses:
- in setting up carpet and ordinary lawns - 4 tons/hectare and 3 t/ha, respectively, during the preparation of the soil.
- in cultivation carpet and ordinary lawns - first feeding in an early spring period - 3 t/ha and 2 t/ha, respectively.

The fertilizer is uniformly spread on a whole surface of a lawn.

### Example 7

5 kg of the bioorganic fertilizer, obtained in Example 1, weighted on a scale 1, are placed in an extractor 2. 20 l of non-chlorinated water at 30⁰C is added to the extractor and periodically stirred within 2 hours. The resulting aqueous suspension is allowed to stand for 60 minutes. The extract is decanted and directed into the reservoir 4 of the water extract.

The deposit is transferred to the hydrolyser **6,** to which 35 l of 5% water extract solution of plant ash is added (the proportion of the water insoluble alkaline deposit : alkaline extractant = 1:7). The alkaline extraction is carried out at 25°C within 12 hours with periodic stirring. The liquid fraction obtained after standing within 60 minutes is decanted and pumped to the tank-reservoir 8 for alkaline extract. To the deposit in hydrolyser 6 35 litres of 5.0% solution of aqueous extract of plant ash is added and alkaline re-extraction of humic substances is carried out in the same conditions (12 hours, 25°C).

The resulting alkaline hydrolyzate is directed to a filtering-drying apparatus nutsche filter type 7, the filtrate of which is pumped to the neutralizer 11. To the neutralizer an alkaline extract from the tank-reservoir 8 is fed and during stirring 1.0 g sorbic acid (10-15 mg/l) and 280 g citric acid from the dispensing container 10 is added to obtain a solution of pH 7.0.

To the neutralizer **11** with neutralized alkaline extract a water extract is pumped during stirring from tank **4** and is fed to the filtration device **12.** The filtrate is collected in reservoir **13,** from which it is fed through the compensator, equipped with control valve **14** to the automatic dosing-pouring machine **15.** The finished product is poured into containers of dark colour and packaged.

The liquid utility form of the bioorganic fertilizer of pH 7 is obtained having composition, wt. %: Total nitrogen - 2.7 ± 0.10, including ammonium nitrogen - 0.8 ± 0.06, total phosphorus (P₂O₅)- 3.2 ± 0.20, total potassium (K₂O) - 3.6 ± 0.10; mg/kg: calcium - 97.81 ± 0.85, magnesium - 42.83 ± 0.67, iron - 15.31 ± 0.26, copper - 0.46 ± 0.06, manganese - 1.30 ± 0.01, zinc - 1.37 ± 0.02; water soluble humates (at least 3500.00 mg/l) and fulvates (at least 1500.00 mg/l); effective micro-organisms balanced according to the generic composition comprising the following dominant genera in the proportion, CFU/ml: lactic fermentation bacteria, *(Lactobacillus plantarum >* 1.0 × 10³, *Lactobacillus casei* > 0.5 × 10³), photosynthetic bacteria *(Rhodopseudomonas* palustris > 0.2 × 10³), yeasts (*Saccharomyces cerevisiae >* 0.3 × 10³), and up to 85% of the biologically active substances, present in the bioorganic fertilizer obtained in Example 1.

The quantitative indicators of the effectiveness of the obtained liquid utility form of the bioorganic fertilizer were determined during tests with winter wheat "Volodarka" species, carried out in Scientific Laboratory of Soil Microbiology Chair of The National University of Life and Environmental Sciences of Ukraine. The scheme of the tests provided not only to compare the liquid utility form to the prototype fertilizer, but also to determine the influence of a dilution of the finished formulation.

Tests results, presented in Table 14, confirm an effectiveness of the submitted liquid utility form of the bioorganic fertilizer at dilution 1:70 and 1:100.

Its advantage (in comparison to the prototype) is significant economy of the formulation (3.5-5.0 times) for achieving comparable agronomic results.

**Table 14**

| Impact of the liquid utility form of the bioorganic fertilizer on a growth and development of Winter wheat of "Volodarka" species | | | | | | |
|---|---|---|---|---|---|---|
| Test varia nt | The composition of the liquid utility form | Length of root/germ, cm | | | Total dry biomass, g | Germinati on capacity, % |
| | | minimal | maximal | average | | |
| Dilution of liquid utility form 1:70 | | | | | | |
| 1. | Corresponds to Example 7 | 8.07/11.12 | 12.05/14.4 6 | 10.06/12.7 9 | 0.713 | 96 |
| 2. | Corresponds to Example 8 | 7.31/10.93 | 13.03/16.2 7 | 10.17/13.6 0 | 0.727 | 94 |
| 3. | Corresponds to Example 9 | 7.02/11.43 | 12.14/14.1 7 | 9.58/12.80 | 0.691 | 95 |
| 4. | Corresponds to Example 10 | 8.16/11.78 | 12.02/12.8 6 | 10.09/12.3 2 | 0.708 | 96 |

| Dilution of liquid utility form 1:100 | | | | | | |
|---|---|---|---|---|---|---|
| 5. | Corresponds to Example 7 | 7.92/11.03 | 12.00/13.0 3 | 9.96/12.03 | 0.702 | 95 |
| 6. | Corresponds to Example 8 | 7.27/10.34 | 11.57/13.8 8 | 9.42/12.11 | 0.673 | 91 |
| 7. | Corresponds to Example 9 | 6.90/10.91 | 11.74/12.9 7 | 9.32/11.94 | 0.671 | 94 |
| 8. | Corresponds to Example 10 | 7.93/10.34 | 11.47/13.6 0 | 9.70/11.97 | 0.662 | 90 |
| 9. | Prototype (dilution 1:20) | 6.80/10.12 | 11.34/11.9 4 | 9.07/11.03 | 0.663 | 92 |
| 10. | Control | 5.52/7.31 | 8.52/8.93 | 7.02/8.12 | 0.595 | 86 |

### Example 8

In order to prepare 80 litres of the liquid utility form, 5 kg of the bioorganic fertilizer obtained in Example 2 is placed in the extractor. 20 l of non-chlorinated water at 25°C (the ratio bioorganic fertilizer : non-chlorinated water = 1:4) is added to the extractor and periodically stirred within 3 hours. The resulting aqueous suspension is allowed to stand for 60 minutes. The extract is decanted and directed into the reservoir of the water extract. The deposit is subjected to alkaline extraction in the same way as described in Example 7, using as extractant 8% solution of water extract of the plant ash. To the alkaline solution, obtained in the result of two extractions 1.0 g sorbic acid is added and it is neutralized with citric acid (290 g) to pH 6.5.

Further operations are carried out similarly to Example 7.

The liquid utility form of the bioorganic fertilizer of pH 6.5 is obtained having composition, wt. %: Total nitrogen - 3.6 ± 0.20, including ammonium nitrogen - 0.7 ± 0.08, total phosphorus (P₂O₅) - 3.8 ± 0.25, total potassium (K₂O) - 4.3 ± 0.15; mg/kg: calcium - 89.43 ± 0.70, magnesium - 41.79 ± 0.65, iron - 17.46 ± 0.30, copper - 0.32 ± 0.10, manganese - 1.17 ± 0.04, zinc - 1.54 ± 0.06; water soluble humates (at least 3500.00 mg/l) and fulvates (at least 1500.00 mg/l); effective micro-organisms in the proportion, CFU/ml: *Lactobacillus plantarum >* 0.4 × 10⁴, *Lactobacillus casei >* 0.9 × 10³, *Saccharomyces cerevisiae >* 1.4 × 10⁴, *Rhodopseudomonas palustris >* 1.1 × 10⁴ and up to 85% of the biologically active substances present in the bioorganic fertilizer obtained in Example 2.

### Example 9

5 kg of the bioorganic fertilizer, obtained in Example 3, is placed in the extractor. Water extraction is carried out under conditions described in Example 8, the alkaline extraction - in the same way as described in Example 7, using 3% solution of the alkaline extractant and duration period 14 hours. To the alkaline solution, in the same way as was described in Example 7, 1.0 g sorbic acid is added and it is neutralized with citric acid (270 g) to pH 7.5.

Further operations are carried out similarly to Example 7.

The liquid utility form of the bioorganic fertilizer of pH 6.5 having composition, wt. %: Total nitrogen - 2.2 ± 0.30, including ammonium nitrogen - 0.46 ± 0.06, total phosphorus (P₂O₅) - 2.6 ± 0.30, total potassium (K₂O) - 3.1 ± 0.40; mg/kg: calcium - 79.42 ± 0.70, magnesium - 39.78 ± 0.40, iron - 17.22 ± 0.34, copper - 0.52 ± 0.08, manganese - 1.23 ± 0.02, zinc - 1.39 ± 0; water soluble humates (at least 3500.00 mg/l) and fulvates (at least 1500.00 mg/l); effective micro-organisms in the proportion, CFU/ml: *Lactobacillus plantarum >* 0.6 × 10⁴, *Lactobacillus casei >* 0.9 × 10³, *Saccharomyces cerevisiae >* 0.1 × 10⁴, *Rhodopseudomonas palustris >* 0.7 × 10³ and up to 80% of the biologically active substances, present in the bioorganic fertilizer obtained in Example 3.

### Example 10

5 kg of bioorganic fertilizer, obtained in Example 4, is placed in the extractor. 25 l of non-chlorinated water at 30⁰C (the ratio of the bioorganic fertilizer : non-chlorinated water = 1:5) is added to the extractor and periodically stirred within 3 hours. Further operations are carried out similarly as described in Example 7, using for each of two alkaline extractions 50 l of 5% extractant solution (the ratio of the water insoluble deposit : alkaline extractant = 1:10). To the alkaline solution 1.5 g sorbic acid is added and it is neutralized with citric acid (295 g) to pH 7.2.

The liquid utility form of bioorganic fertilizer having composition, wt. %: Total nitrogen - 1.8 ± 0.40, including ammonium nitrogen - 0.42 ± 0.03, total phosphorus (P₂O₅) - 2.3 ± 0.31, total potassium (K₂O) - 2.7 ± 0.15; mg/kg: calcium - 78.63 ± 0.65, magnesium - 39.27 ± 0.44, iron - 12.64 ± 0.20, copper - 0.47 ± 0.04, manganese - 1.13 ± 0.02, zinc - 1.22 ± 0.04; water soluble humates (at least 3500.00 mg/l) and fulvates (at least 1500.00 mg/l); effective micro-organisms in the proportion, CFU/ml: *Lactobacillus plantarum >* 0.4 × 10³, *Lactobacillus casei >* 1.8 × 10² , *Saccharomyces cerevisiae >* 2.3 × 10², *Rhodopseudomonas palustris >* 1.6 × 10² and up to 85% of the biologically active substances, present in the bioorganic fertilizer obtained in Example 4.

### Example 11

In order to prepare 250 litres of liquid utility form of the bioorganic fertilizer all technological operations are carried out similarly as described in Example 7, using the following quantities of ingredients and conditions:
- starting raw material - 15 kg of bioorganic fertilizer, obtained in Example 1;
- water extraction - 60 l non-chlorinated water (the ratio of the starting raw material and water = 1:4), temperature 30°C, duration period 3 hours;
   - - alkaline extraction - 105 | 5% extractant solution (the proportion of deposit: extractant = 1:7), temperature 25°C, duration period 12 hours, repeatability - 2;
   - - inhibition of fermentation processes - 3.1 g of sorbic acid.
   - - neutralization - 875 g of citric acid to pH 7.0;

The liquid utility form of bioorganic fertilizer is received, the composition and properties of which are similar to those given in Example 7

The standards, doses and timing of application the submitted bioorganic fertilizer and its liquid utility form given in Examples 7-11 completely satisfy the needs of crops, forest and ornamental plants taking into of their biological characteristics and intensity of the absorption of nutrients throughout the whole growing season.

The above-described submitted technical solutions and their distinguishing features completely eliminate the deficiencies of known similar solutions (prototypes).

Their implementation provides the following advantages of submitted bioorganic fertilizer and its liquid utility form:
- the developed highly effective bioorganic fertilizer and its liquid utility form are fertilizers of a new generation;
- they meet the requirements required from bioorganic fertilizers, useful in organic farming;
- they contain 1.5-2.5 times more macro-and micronutrients;
- they have high buffering characteristics, which allow avoiding excessive concentration of salts in the soil solution;
- they additionally contain effective micro-organisms balanced according to the generic composition comprising the following dominant genera: lactic fermentation bacteria (Lactobacillus *plantarum, Lactobacillus casei),* photosynthetic bacteria (Rhodopseudomonas palustris), yeasts (Saccharomyces *cerevisiae)*,);
- they contain 1.5-3.0 times more the biologically active products of their activities, including enzymes, vitamins, amino acids, organic acids, polysaccharides, lipids, humus substances;
- they are characterized by a lack of undesirable foreign bacterial microflora;
- they have a composition, balanced for specific plants taking into their biological characteristics and physiological needs;
- they exhibit fungicide characteristics;
- the bioorganic fertilizer has three times higher humification rate, high physicalmechanical parameters and functional properties (flow ability, looseness, homogeneity, lack of smell);
- they are universal fertilizers and they don't have seasonal restrictions in using;
- the doses of their use are 1.5 - 2.0 times lower in comparison to the prototype fertilizers.

The method of receiving liquid utility form of bioorganic fertilizer in comparison to the prototype method has the following advantages:
- all substances that are used for preparing the liquid utility form, have exclusively organic and biological nature;
- as a starting raw material is used the bioorganic fertilizer of a new generation, , which is obtained by the microbiological fermentation and containing the effective microorganisms balanced according to the generic composition;
- the technological process is significantly simplified by eliminating the step of microbiological fermentation with increasing amounts of useful micro-organisms biomass. In the prototype method, the duration period of this stage is achieved within 24 hours at a temperature 20-35°C and continuous aeration;
- as an extractant for alkaline extraction of humic substances is used a water extract of the plant ash, which additionally enrich the finished product in the macro- and micronutrients. In addition, the ash plant is a stimulant of the fermentation processes because it has rich mineral composition. The highest its value is potassium carbonate being its component, which is readily dissolved in water and is well absorbed by plants. magnesium, sulphur, iron, boron, manganese and many other elements contained in the ash are also in form available for plants and are extremely valuable because they are a mandatory component part of many enzymes, vitamins, growth substances, carrying out important biological role of biological accelerators and regulators of very complex biochemical and microbiological processes;
- energy consumption for the preparation of a liquid utility form of the bioorganic fertilizer is significantly reduced because the alkaline extraction is carried out at temperature 20-40°C, in the prototype method in the 60-100°C;
- neutralization of the alkaline extract is carried out with citric acid. In addition, the quality of the formulation is increased because the chelate compounds with macro nutrients and micro-nutrients are formed during neutralization.
- neutralization is conducted to pH 6.5-7.5 (in the prototype method - to pH 8.0-9.5), which ensures universality of the submitted liquid utility form of the bioorganic fertilizer;
- inhibition of fermentation processes in the finished product is carried out with sorbic acid, which ensures to obtain a liquid formulation of consistently high quality.
- using of special equipment and security measures necessary during high-temperature alkaline extraction is not required;
- it ensures the implementation of energy-efficient, technologically and ecologically waste free production.

The developed method is energy-efficient, technologically and environmentally safe, it does not require using means for environmental protection and ensures receiving of a liquid utility form of bioorganic fertilizer with a high concentration and functionality, containing effective micro-organisms balanced according to the generic composition with simultaneous lack of pathogenic microflora.

In the result of repeated production field studies of submitted bioorganic fertilizer and its liquid utility form, their high effectiveness was confirmed when used on the crop, forestry, and ornamentals plants. Thus, using of bioorganic fertilizer provides: increasing of fertility of cultivated and berry crops by 10-30% while increasing their quality; an increase of 18-30% of resistance of trees and ornamental plants to diseases and pests.

The use of the liquid bioorganic fertilizer not only increases the fertility of the vegetables (by about 17-32% compared with the prototype fertilizer), but also accelerates their maturation. At the same time the biological value of products is increasing: the content of starch, vitamins and carotene in vegetables is increased; the nitrate content is significantly reduced. Pre-seed dressing of seeds at a dose of 7 I/t increases the fertility of wheat to 2.6 - 4.1 q/ha barley to 4.7 q/ha and lupine to 4.5 q/ha. Foliar feeding of plants in phases 3-5 leaf and ear emergence at a dose of 5 I/ha increases plant growth, which ensures growth of cereal crops to 6.5 q/ha, sunflower to 7 q/ha.

Comprehensive application of the liquid bioorganic fertilizer ensures obtaining high yields of ecological clean products, optimizes the absorption of mineral nutrients by the crops, purifies the soil of harmful substances and pathogenic micro-organisms, soil rehabilitation and reduces the chemical load of agricultural lands.

Scientific-Technical Council of the Ministry of Economy of Ukraine Residential-Public Utilities approved the positive experience in the implementation of liquid bioorganic fertilizer and its utility form, socio-economic and agro-ecological effectiveness of the care of green areas in cities of Ukraine (Decision No. 92 of 18.02.2010 r.).
The bioorganic fertilizer passed the state examination and it is recommended for implementation in agriculture, nurseries of ornamental plants and management of green areas.

## Claims

1. A method of obtaining a liquid bioorganic fertilizer, comprising water extraction of mineral nutrition elements and bioactive substances contained in the starting raw materials, separation of water-insoluble sediment, alkaline extraction of humus substances from it, separation of alkaline extract, its neutralization and addition to the obtained water extract, **characterized in that:**
only preparations of organic origin are used at all preparation stages;
solid, loose, bioorganic fertilizer, containing effective microorganisms in addition to a complex of plant mineral nutrition elements and bioactive substances, is used as the starting raw material, wherein the said effective microorganisms are balanced in species composition, including the following dominant species in the ratio, CFU/ml: lactic acid bacteria *(Lactobacillus plantarum >* 1.5·10³ - 1.5·10⁵, *Lactobacillus casei* > 3.5·10² - 3.5·10⁴), photosynthetic bacteria (*Rhodopseudomonas palustris* >4.5·10² - 4.5·10⁴), yeasts (*Saccharomyces cerevisiae >* 7.1·10² - 7.1·10⁴);
the solid, loose, bioorganic fertilizer is obtained by aerobic microbiological fermentation of manure and peat, taken in the ratio 4.0:5.0 - 5.0:4.0, using an activated microbiological preparation diluted with non-chlorinated water at a ratio of 1: 50-1: 400,
wherein the said microbiological preparation contains effective microorganisms balanced in species composition in the following ratio, CFU/ml: *Lactobacillus plantarum* >*1*.5*·*10⁷, *Lactobacillus casei* > 3.5·10⁶, *Rhodopseudomonas palustris* > 4,5·10⁶, *Saccharomyces cerevisiae >* 7.1·10⁶;
water extraction is performed during 1-3 hours at 20-40⁰C with the ratio of starting raw material to extractant 1:3-1:5;
the water extract contains living effective microorganisms; alkaline extraction is carried out twice during 10-16 hours at 20-40°C, using a 3.0-8.0% solution of water extract from plant ash, taken at the ratio of water-insoluble sediment to alkaline extractant 1:5-1:10, as an extractant;
the alkaline extract is neutralized with citric acid to pH value 6.5-7.5; 10-15 mg/L of sorbic acid is added to it for inhibition of fermentation processes;
it is combined with water extract, mixed, and filtered to obtain the target liquid product.

## Patentansprüche

1. Verfahren zur Herstellung eines flüssigen bioorganischen Düngemittels, umfassend die wässrige Extraktion von mineralischen Pflanzennährstoffen und bioaktiven Substanzen aus dem Ausgangsrohstoff, die Abtrennung des wasserunlöslichen Sediments, die alkalische Extraktion von Huminstoffen aus diesem Sediment, die Abtrennung des alkalischen Extrakts, dessen Neutralisation sowie die Zugabe des neutralisierten alkalischen Extrakts zu dem erhaltenen wässrigen Extrakt, **dadurch gekennzeichnet, dass:**
in allen Herstellungsstufen ausschließlich Zubereitungen organischen Ursprungs verwendet werden;
ein festes, schüttfähiges bioorganisches Düngemittel, das wirksame Mikroorganismen zusätzlich zu einem Komplex mineralischer Pflanzennährstoffe und bioaktiver Substanzen enthält, als Ausgangsrohstoff eingesetzt wird,
wobei die genannten wirksamen Mikroorganismen in ihrer Artenzusammensetzung ausgewogen sind und insbesondere folgende dominante Spezies in den angegebenen Konzentrationen (KBE/ml) umfassen: Milchsäurebakterien (*Lactobacillus plantarum >* 1,5·10³ - 1,5·10⁵, *Lactobacillus casei* > 3,5·10² - 4,5·10⁴), photosynthetische Bakterien (*Rhodopseudomonas palustris*)> 4,5·10² - 4,5·10⁴), Hefen (*Saccharomyces cerevisiae >* 7,1·10² - 7,1·10⁴);
das feste, schüttfähige bioorganische Düngemittel durch aerobe
mikrobiologische
Fermentation von Mist
und Torf hergestellt wird, die im Verhältnis 4,0:5,0-5,0:4,0 eingesetzt werden, unter Verwendung eines aktivierten mikrobiologischen Präparats, das mit nicht chloriertem Wasser im Verhältnis 1:50-1:400 verdünnt ist,
wobei das mikrobiologische Präparat wirksame Mikroorganismen enthält, die in ihrer Artenzusammensetzung ausgewogen sind und folgende Konzentrationen (KBE/ml) aufweisen: *Lactobacillus plantarum >* 1,5·10⁷, *Lactobacillus casei* > 3,5·10⁶, *Rhodopseudomonas palustris* > 4,5·10⁶, *Saccharomyces cerevisiae >* 7,1·10⁶;
die wässrige Extraktion 1-3 Stunden bei einer Temperatur von 20-40 °C durchgeführt wird, wobei das Verhältnis von Feststoff zu Extraktionsmittel 1:3-1:5 beträgt;
der wässrige Extrakt lebende wirksame Mikroorganismen enthält; die alkalische Extraktion zweimal über 10-16 Stunden bei 20-40 °C unter Verwendung einer 3,0-8,0%igen Lösung eines wässrigen Pflanzenaschenextrakts als Extraktionsmittel durchgeführt wird, wobei das Verhältnis von wasserunlöslichem Sediment zu alkalischem Extraktionsmittel 1:5-1:10 beträgt;
der alkalische Extrakt mit Zitronensäure auf einen pH-Wert 6,5-7,5 neutralisiert wird; 10-15 mg/l Sorbinsäure zur Hemmung von Fermentationsprozessen zugesetzt werden;
anschließend der neutralisierte alkalische Extrakt mit dem wässrigen Extrakt kombiniert, vermischt und filtriert wird, um das flüssige Zielprodukt zu erhalten.

## Revendications

1. Procédé d'obtention d'un engrais bioorganique liquide, comprenant l'extraction aqueuse des éléments de nutrition minérale des plantes et des substances bioactives contenus dans la matière première initiale, la séparation du sédiment insoluble dans l'eau, l'extraction alcaline des substances humiques à partir dudit sédiment, la séparation de l'extrait alcalin, sa neutralisation ainsi que l'addition de l'extrait alcalin neutralisé à l'extrait aqueux obtenu, **caractérisé en ce que**
à toutes les étapes de préparation, seules des préparations d'origine organique sont utilisées ;
un engrais bioorganique solide
et pulvérulent, contenant des micro-organismes efficaces en plus d'un complexe d'éléments minéraux de nutrition des plantes et de substances bioactives, est utilisé comme matière première,
lesdits micro-organismes efficaces étant équilibrés en composition spécifique et comprenant notamment les espèces dominantes suivantes dans les concentrations indiquées (UFC/ml) :
bactéries lactiques *(Lactobacillus plantarum >* 1,5·10³-1,5×10⁵ *, Lactobacillus casei* > 3,5·10²-4,5·10⁴) , bactéries photosynthétiques (*Rhodopseudomonas palustris* > 4,5·10²-4,5·10⁴) , levures (*Saccharomyces cerevisiae >* 7,1·10²-7,1·10⁴) ;
l'engrais bioorganique solide et pulvérulent étant obtenu par fermentation microbiologique aérobie
de fumier et de tourbe, mis en œuvre dans un rapport 4,0:5,0-5,0:4,0, au moyen d'une préparation microbiologique activée diluée avec de l'eau non chlorée dans un rapport 1:50-1:400,
ladite préparation microbiologique contenant des micro-organismes efficaces équilibrés en composition spécifique et présentant les concentrations suivantes (UFC/ml) : *Lactobacillus plantarum >* 1,5·10⁷ , *Lactobacillus casei* > 3,5·10⁶ *, Rhodopseudomonas palustris* > 4,5·10⁶ , *Saccharomyces cerevisiae >* 7,1·10⁶ ;
l'extraction aqueuse étant effectuée pendant 1-3 heures à une température de 20-40 °C, le rapport matière solide/extractant étant 1:3-1:5 ;
l'extrait aqueux contenant des micro-organismes efficaces vivants ; l'extraction alcaline étant réalisée deux fois pendant 10-16 heures à 20-40 °C au moyen d'une solution 3,0-8,0% d'extrait aqueux de cendres végétales en tant qu'agent d'extraction, le rapport sédiment insoluble/extractant alcalin étant 1:5-1:10 ;
l'extrait alcalin étant neutralisé à l'aide d'acide citrique jusqu'à une valeur de pH 6,5-7,5; 10-15 mg/l d'acide sorbique étant en outre ajoutés afin d'inhiber les processus de fermentation ;
l'extrait alcalin neutralisé étant ensuite combiné avec l'extrait aqueux, mélangé et filtré afin d'obtenir le produit liquide final.
